(19) **Europäisches Patentamt**
**European Patent Office**
**Office européen des brevets**

(11) **EP 1 941 256 B1**

(12) **EUROPEAN PATENT SPECIFICATION**

(45) Date of publication and mention
of the grant of the patent:
**23.11.2011 Bulletin 2011/47**

(51) Int Cl.:
***G01N 1/40*** *(2006.01)*     ***B01L 3/00*** *(2006.01)*

(21) Application number: **06806055.7**

(22) Date of filing: **05.10.2006**

(86) International application number:
**PCT/EP2006/009645**

(87) International publication number:
**WO 2007/039300 (12.04.2007 Gazette 2007/15)**

(54) **MICROFLUIDIC EVAPORATORS AND PROCESS FOR DETERMINING PHYSICAL AND/OR CHEMICAL PROPERTIES OF CHEMICAL COMPOUNDS OR MIXTURES OF CHEMICAL COMPOUNDS**

MIKROFLUIDVERDAMPFER UND VERFAHREN ZUR BESTIMMUNG PHYSIKALISCHER UND/ODER CHEMISCHER EIGENSCHAFTEN CHEMISCHER VERBINDUNGEN ODER VON GEMISCHEN CHEMISCHER VERBINDUNGEN

EVAPORATEURS MICROFLUIDIQUES ET PROCEDE POUR DETERMINER DES PROPRIETES PHYSIQUES ET/OU CHIMIQUES DE COMPOSES CHIMIQUES OU DE MELANGES DE COMPOSES CHIMIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.10.2005 US 724127 P**

(43) Date of publication of application:
**09.07.2008 Bulletin 2008/28**

(73) Proprietors:
• **Rhodia Opérations**
**93306 Aubervilliers (FR)**
• **Centre National de la Recherche Scientifique**
**75016 Paris (FR)**

(72) Inventors:
• **JOANICOT, Mathieu**
**F-92290 Chatenay-Malabry (FR)**
• **LENG, Jacques**
**F-33000 Bordeaux (FR)**
• **AJDARI, Armand**
**F-75013 Paris (FR)**
• **TABELING, Patrick**
**F-94240 L'Hay-les-Roses (FR)**

(74) Representative: **Dubruc, Philippe**
**Rhodia Services**
**Direction de la Propriété Industrielle**
**40 Rue de la Haie-Coq**
**93306 Aubervilliers Cedex (FR)**

(56) References cited:
**EP-A2- 0 135 419       EP-A2- 1 582 855**
**US-A1- 2003 203 506    US-A1- 2004 115 838**
**US-A1- 2004 120 856**

**Description**

<u>Brief summary of the invention</u>

The invention relates to a microfluidic device and to a process involving used of the device. The device comprises a membrane allowing evaporation. The process involves performing a measurement or observation of compounds introduced in the device.

Determination of the phase diagram of multicomponent systems is of importance in many realms: industrial formulation, protein cristallization, bottom up material assembly from spontaneous ordering of surfactant, polymeric or colloidal systems. Methods to reach this goal include thermal variations (in space or time) of samples of fixed concentrations or isothermal concentration by either removal of the solvent (osmosis, drying) external action on the solutes (sedimentation or dielectrophoresis for colloids), or studies of spontaneous interdiffusion in contact experiments. Depending on the application, one may want to access only the equilibrium phase diagram or gain additional information as to the metastable phases that can appear for kinetic reasons.

US 2004/0115838 A1 describes a microfluidic device with flow channels which can be used for separation and concentration applications. This document does not disclose a device with an evaporation chamber and an evaporation membrane. It does not disclose either a device with an accumulation chamber at the extremity of a flow channel.

EP-A2-135419 describes a method of membrane evaporation and apparatus but this document is not concerned with microfluidic devices.

The invention introduces microfluidic tools for controlled isothermal concentration of a wide range of systems, covering solutions of ions, polymers, proteins, surfactants and colloidal suspensions.

The invention allows performing precise measures and/or sets of measures, and/or allows performing rapid measures and/or sets of measures, and/or allows performing simple measures and/or sets of measures, and/or performing measures and/or sets of measures with low amounts of matter.

<u>Brief description of the drawings</u>

Figure 1 is a schematic representation, with a top view and side view, of a device and a processed composition of matter, without accumulation chamber, wherein the device is multilayered and has a single blind extremity flowing channel, surrounded by a single closed evaporation chamber.

Figure 2 is a schematic representation, with a top view and side view, of a device without accumulation chamber, wherein the device is multilayered and has a 4 blind extremities flowing channels of different lengths, surrounded by a single closed evaporation chamber.

Figure 3 is a schematic representation, with a top view and side view, of a device and a processed composition of matter, according to an embodiment of the invention, wherein the device is multilayered, and has a single flowing channel surrounded by a single closed evaporation chamber, the flowing channel having an accumulation chamber.

Figure 4 is a schematic representation, with a top view and side view, of a device without accumulation chamber, wherein the device is monolayered, and has 2 blind extremities flowing channels, surrounded by a single open-air evaporation zone.

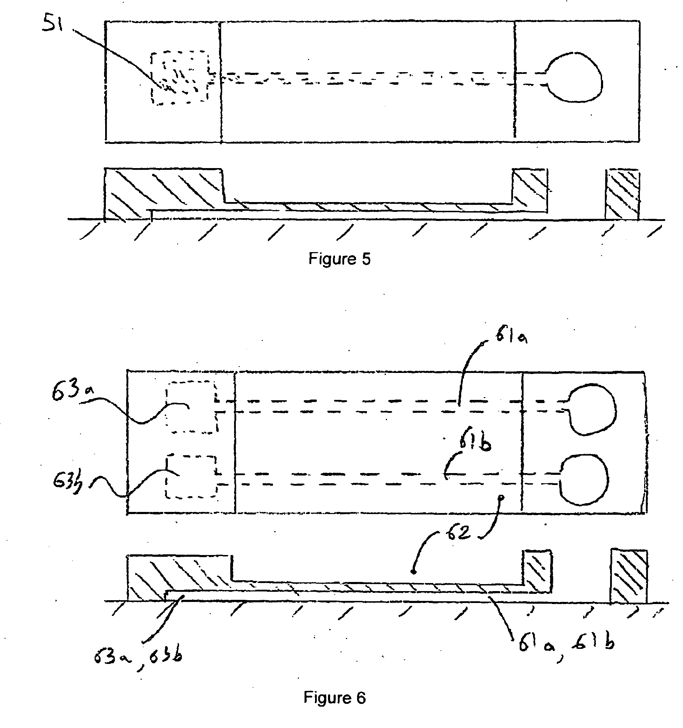

Figure 5 is a schematic representation, with a top view and side view, of a device according to an embodiment of the invention, wherein the device is monolayered, and has a single flowing channel surrounded by a single open-air evaporation zone, the flowing channel having an accumulation chamber.

Figure 6 is a schematic representation, with a top view and side view, of a device according to an embodiment of the invention, wherein the device is monolayered, and has a two flowing channels surrounded by a single open-air evaporation zone, the flowing channels having each an accumulation chamber.

Figures 7 and 8 are schematic representations, with side views, of devices according to embodiments of the invention, wherein the device is multilayered and has a single flowing channel surrounded by a single closed evaporation chamber, the flowing channel having a tri-dimensional accumulation chamber.

Figure 9 shows measures and/or computations thereof relating to fluorescent tracers in the examples

Figure 10 shows measures and/or computations thereof relating to concentrations in the examples.

Figure 11 shows photographs, measures and/or computations thereof relating to crystal growth in the examples.

Figure 12 shows photographs relating to crystal growth in the examples.

Detailed description of the invention

Device

The invention relates to a monolayered or multilayered device comprising:

- at least one elongated flowing channel (1, 21 a, 21 b, 41a, 41 b, 61 a, 61 b, 71, 81) which has a width and/or depth of less than 10 μm and a length of more than 1 mm, for flowing a liquid therein, having a length and a width and/or depth, in a first layer, said channel having a closed section,
- at least one chamber (2, 72, 82) or zone in a second layer,
- said chamber or zone surrounding the width and/or depth of the channel, along at least 1/3 of the length, preferably at least 1/2, preferably at least 2/3, and/or along at least 10 times the width and/or depth of the flowing channel, preferably at least 100 times;

characterized in that

- said chamber (2, 72, 82) or zone is an evaporating chamber for flowing a gas therein, said chamber having a closed section, or at least one evaporating open-air zone (42, 62),
- the flowing channel and the evaporation chamber or zone being separated by an evaporation membrane (3, 43, 73, 83);
- the flowing channel(s) extends beyond the evaporation chamber(s) or zone(s), and has an enlarged blind extremity forming an accumulation chamber (31, 51, 63a, 63b, 74, 84), not surrounded by the evaporation chamber(s) or zone (s).

The device is a microfluidic device.

The length of the flowing channel(s) is preferably of at least 100 times its width and/or depth.

The closed cross section of the flowing channels can be for example comprised of 4 elongated walls defining width and depth in the section plan, and length in the elongation plan.

The device preferably comprises at least one microfabricated element (4a, 4b). The microfabricated element can be comprised of:

- an elastomeric material, such as a silicone such as polydimethylorganosiloxane (PDMS), or
- a non elastomeric material such as a metal or glass, or non elastomeric plastic.

Microfabrication techniques and materials are know by the one skilled in the art, especially in the field of microfluidics.

A closed evaporation chamber is typically provided with a multilayered device. An evaporating open air zone is typically provided with a monolayered device. Typically a multilayered device associates several layers of microfabricated elements. The association can be performed by bonding a microfabricated element onto the other, for example by pasting or welding. Typically a monolayered device has a single microfabricated element.

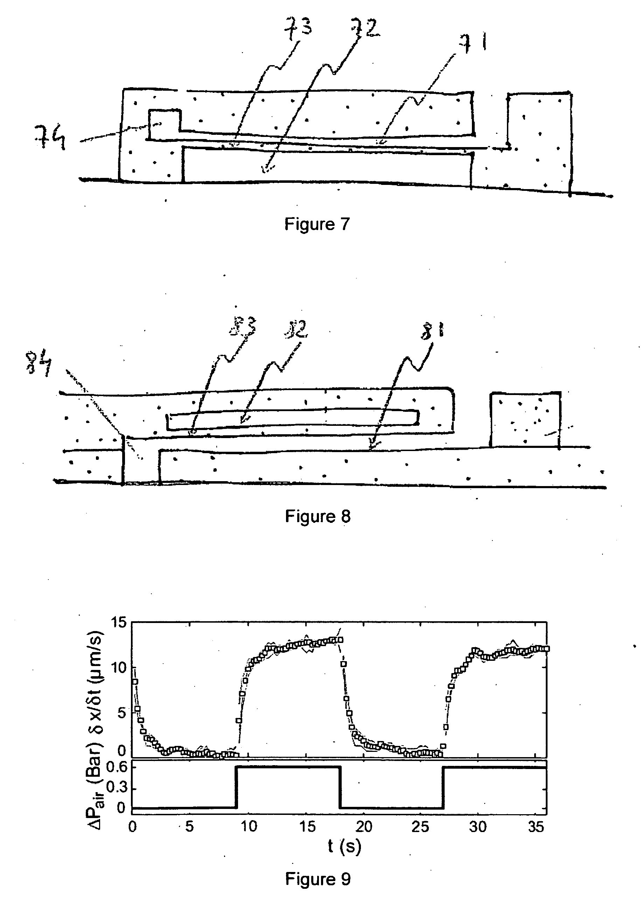

The evaporating chamber or zone surrounds the width and/or depth of the channel. By surrounding it is meant that the chamber or zone is close to the flowing channel(s) and that for at least one segment of the flowing channel(s), said flowing channel(s) and the evaporation chamber or zone are separated by an evaporation membrane or a part thereof. The surrounding can be also referred to a covering. However it is possible to have the evaporation chamber or zone on top of the flowing channel(s) as shown on Figure 8, or to have the flowing channel(s) on top of the evaporation chamber or zone as shown on Figure 9.

The evaporations chamber has preferably two channels allowing a gas inlet and a gas outlet.

For examples the device can comprise a first layer and an optional second layer, wherein:

- the first layer comprises a first microfabricated element comprising the evaporation membrane and the flowing channel(s) carved into said first element, closed with a support plate (5) such as a glass or metal plate,
- the optional second layer comprises a second microfabricated element comprising the evaporation chamber(s) carved into said second element, closed with the evaporation membrane of first layer.

The evaporation membrane is typically a part of a microfabricated element. It is preferred that the evaporation membrane be substantially not deflectable and is not deflected during the use of the device. Deflection can be controlled by managing the thickness of the membrane and/or its material. Deflection can be also controlled by managing the dimensions of the flowing channel(s) for example by using a channel(s) with a low with and/or depth is the segment surrounded by the evaporation chamber or zone. Deflection can be also controlled by managing the gas flow and/or the gas pressure. Upon flowing a gas deflection of the membrane should be avoided in order to prevent stopping a flow in the flowing channel(s).

The evaporation membrane typically closes a part of the section of the flowing channel(s) and of the evaporation chamber, and/or closes a part of the section of the flowing channel(s) and defines the evaporation zone. '

It is preferred that the evaporation chamber(s) or zone(s) be elongated and substantially parallel to the flowing channel(s).

The flowing channel(s) can have a width and/or depth of less than 10 $\mu$m, preferably of less than 5 $\mu$m.

The flowing channel(s) can have a length of more than 1 mm, preferably of more then 5 mm, preferably of more than 10 mm.

The evaporation membrane can have a thickness of lower than 100 $\mu$m, preferably of lower than 50 $\mu$m.

The evaporation chamber(s) or zone(s) is preferably an elongated channel, open-air or closed, having a length and a width and/or depth, the width and/or depth being higher than the width and/or depth of the flowing channel(s).

In one embodiment the device comprises:

- at least two flowing channels (21a, 21b or 41a, 41b, or 61a or 61b), being parallel on at least one segment thereof,
- a single evaporation chamber (22) or zone (42, 62) surrounding the at least two flowing channels, or at least two evaporation chambers or zones, preferably evaporation channels, surrounding each at least one of the flowing channels.

In this embodiment the at least two flowing channels can have each a different length surrounded by the evaporation chamber(s) or zone(s).

The device can further comprise means for providing heat, such as means for heating a gas introduced into the evaporation chamber(s) or zone(s), said heat being optionally provided as a constant or as a gradient along at least a part of the channel(s). The device can thus comprise means for flowing a gas into the evaporation chamber or zone. For example the evaporation chamber can be connected to a gas dispenser such as a bottle with a vane, with a gas heater. The temperature of the gas is preferably controlled and/or measured.

The device typically comprises means (6) for providing a liquid into the flowing channel(s). Examples of such means include a reservoir or a syringe. The reservoir can be filled with any appropriate mean, such as a syringe, a bottle, a pipette, a capillary tube etc...

Typically the flowing channel(s) has:

- an introduction extremity, linked to means (6) for providing a liquid into the flowing channel(s), and
- an ending extremity, being linked to means for recovering matter comprised into the channels, or preferably being a blind extremity (7, 31, 51, 63a, 63b, 74, 84).

According to the invention:

- the flowing channel(s) extends beyond the evaporation chamber(s) or zone(s), and has a blind extremity not surrounded by the evaporation chamber(s) or zone(s), and
- the flowing channel(s) have an enlarged blind extremity forming an accumulation chamber (31, 51, 63a, 63b, 74, 84), not surrounded by the evaporation chamber(s) or zone(s).

By "enlarged" it is meant the blind extremity has a width and/or depth substantially higher than the width and/or depth or the flowing channel(s), preferably of at least 5 times higher. In one mode the accumulation chamber is enlarged only for its depth or width. It can be referred to a 2-dimensionnal accumulation chamber (31, 51, 63a, 63b). In another mode the accumulation chamber is enlarged for its depth and its width. It can be referred to a 3-dimensionnal accumulation chamber (74, 84). 3-dimensionnal accumulation chambers can allow accumulating more composition of matter, and can allow having much more composition of matter there than in the flowing channel(s).

The accumulation chamber is usually not connected to means for removing matter therefrom. Once compositions of matter have accumulated there and once measures and/or observations have been performed, the device (or at least the part of the device comprising the flowing channel(s)) is usually disposed of. There is usually no connection from the accumulation chamber to out of the device, except via the flowing channel(s). On the contrary for example a reservoir is connected to the flowing channel and to out of the device (for example with an open-air opening as represented to the figures).

In one embodiment the flowing channel(s) has two introduction extremities, both being linked to means for providing a liquid into the each of the extremities of the flowing channel(s). Such means include reservoir, syringes etc...

Usually the device will comprise means for mixing at least one chemical compound and a carrier liquid to be at least partly evaporated along the channel(s), upstream the flowing channel. Conventional pots and/or mixers can be used. In one embodiment the device can be associated to a microfluidic mixing device allowing providing a range of concentrations of mixture along time, and/or topography, for example comprising several mixing output channels, connected to several flowing channels, for example a Whitesides-like Microfluidic mixing device.

According to a specific embodiment the device has:

- at least two flowing channels, and
- at least one open-air evaporation zone, or
- at least two flowing channels, and
- at least one closed evaporation chamber.

According to a specific embodiment the device has:

- at least one, preferably at least two, accumulation chamber(s) which is not surrounded by an evaporation membrane, and
- at least one open-air evaporation zone, or
- at least one, preferably at least two, accumulation chamber which is not surrounded by an evaporation membrane, and
- at least one closed evaporation chamber.

Process for determining properties - Process of use of the device - Applications

The invention also relates to a process for determining physical and/or chemical properties of chemical compounds or mixtures of chemical compounds, comprising the steps of:

a) providing:

- a liquid mixture of a carrier fluid and one or several candidate chemical compound(s) into the flowing channels) of the microfluidic device, and
- a gas flow in the evaporation chamber, or an open-air contact to the evaporation zone, or a gas flow surrounding the evaporation zone,

b) flowing the liquid mixture along at least a part the flowing channel(s), and removing at least partly the carrier fluid from the channel by evaporating through the membrane into the evaporation chamber or into the open-air evaporation zone, thereby providing in the flowing channel(s) solid or liquid compositions of matter with different concentrations of carrier and residence times along the channel(s) (for example variations upon time and/or space along the flowing channels(s)), and thereby providing accumulation of compositions of matter in the accumulation chamber of the device,
c) performing at least one measurement or observation of a composition of matter:

- in the channel(s), at least one point along the channel(s), and/or
- in the accumulation chamber.

Typically the flowing in step b) can be induced by removal of the carrier fluid, the flowing being optionally stopped upon solidification of the mixture (dynamic movement of carrier fluid). Without being bound to any theory, it is believed that motion (flow) of the liquid in the flowing channel(s) is induced by evaporation of the carrier. The liquid can flow to an extremity of the flowing channel(s), optionally to an accumulation chamber. Alternatively the liquid can flow in a part the flowing channel(s), to a point where is solidifies completely, beyond which there is no flowing. Complete solidification can be due to a lack of a sufficient amount of carrier further to evaporation. Preferably substantially no movement of fluid is induced in the accumulation chamber, if the device has such a chamber, and the concentration of carrier fluid in the chamber being of zero or higher.

It is preferred that the carrier fluid be chemically compatible with the channel(s) material(s) and the evaporation membrane material(s), and such that the membrane/carrier system allow transfer of the carrier trough the membrane (for example by having appropriate membrane thickness, porosity and/or material). Compatibility means that the carrier fluid should not chemically degrade to flowing channel(s)'s and membrane's material, and should not be repelled by the membrane's material.

The liquid mixture comprises a carrier and one or several candidate chemical compound(s). In the embodiment where the liquid mixture comprises several candidate compounds, these several compounds can represent a mixture and/or association and/or reagents, that is to be studied and/or screened via the measurement and/or observation.

The gas flow is provided by appropriate means. The gas flow is at a temperature and/or at a flow rate allowing evaporation of the carrier and removal thereof from the evaporation chamber or evaporation zone. Open air contact might provide enough heat and movement to do so.

In step a) a liquid is provided in the flowing channel(s). The liquid is typically by appropriate means, for example by a reservoir. The liquid is thus a placed at an inlet(s) of the flowing channel(s).

The candidate chemical compound(s) can form a solid along the channel(s), said solid being:

- dispersed in the carrier fluid (the solid can be a precipitate, or a crystal for example), optionally accumulating in a part of the flowing channel(s) and/or in the accumulation chamber if the device has such a chamber, or
- completely solidified.

The solid can form because of removal of the carrier by the evaporation.

In one embodiment the compositions of matter are varied, in space along the channel(s) and/or in time at one point along the channel(s), by varying the gas flow characteristics, such as stopping and/or re-starting the gas flow or varying the speed flow, or varying the temperature. It is believed that varying the gas flow characteristics, controls distribution of solids and/or concentrated phases in the carrier fluid, allows for example relaxation and/or diffusion of solids back along the flowing channel(s) upon lowering or stopping evaporation flow (lowering gas flow and/or stopping gas flow and/or lowering temperature).

In one embodiment:

- the candidate compound(s) forms a solid and/or a concentrated phase along the channel(s) that accumulates in the accumulation chamber of the device, and
- a flow of solids in time and/or in space is controlled, as diffusion of solids back in the channel is controlled.

In one embodiment the composition of matter in the accumulation chamber varies along time, for example the concentration varies (usually increasing by accumulation).

It is believed that the accumulation chamber can help in addressing diffusion artifacts when several candidate compounds are present in the liquid. One would typically perform measurements and/or observations at the accumulation chamber, and optionally at the border thereof, in the flowing channel(s) just before the accumulation chamber. The amount of a solute candidate compound in the accumulation chamber vis a vis the amount in the flowing channel can be determined. If two solute candidate compounds are introduced in a known ratio in the flowing channel, then the same ratio will be retrieved in the accumulation chamber, without possible diffusion artifacts that can be observed in the flowing channel. The accumulation chamber can thus improve precisions of measurements, observations and/or datas obtained from computations therefrom.

In one embodiment one can perform a first measure in the accumulation chamber at time t1 with a proportion of carrier fluid of c1, and then perform at least one second measure in the accumulation chamber at time t2 with a proportion of carrier fluid of c2 being lower than c1 (as matter accumulates). One would then compute the measures to determinate a useful property or parameter.

In one embodiment one can introduce first in the flowing channel a mixture of candidate compounds A and B with relative proportion of respectively a/(a+b) and b/(a+b) then one can perform a measure in the accumulation chamber for said proportions, then one can introduce a second proportion of a'/(a'+b') and b'/(a'+b'), and then perform a measure in the accumulation chamber for proportions respectively of (a+a')/(a+a'+b+b') and (a+a')/(a+a'+b+b'). One would then compute the measures to determinate a useful property or parameter.

In one embodiment the device comprises at least two flowing channels (21 a, 21b), being parallel on at least one segment thereof. In one aspect of this embodiment the device can have accumulation chambers associated with the flowing channels, and one can perform the following:

- first step:

  - one introduces in a first flowing channel a mixture of candidate compounds A and B with relative proportion of respectively a/(a+b) and b/(a+b) then one performs a measure in the in the accumulation chamber of said channel for said proportions,
  - one introduces in a second flowing channel a mixture of candidate compounds A and B with relative proportion of respectively a'/(a'+b') and b'/(a'+b') then one performs a measure in the in the accumulation chamber of said channel for said proportions,

- optionally, then second step:

- one reiterates the measure with same proportions in respective

accumulation chambers but with different concentrations of carrier fluid.

In another aspect of the embodiment one liquid mixture being provided into one of the flowing channels is a reference liquid mixture, having a known physical and/or chemical property. One would typically measures a property for one or several channel(s) having a candidate compound and compare it to a measure performed for the channel having the reference liquid mixture. One would compute to measures and/or comparison to determine a useful property or parameter.

In still another aspect of the embodiment:

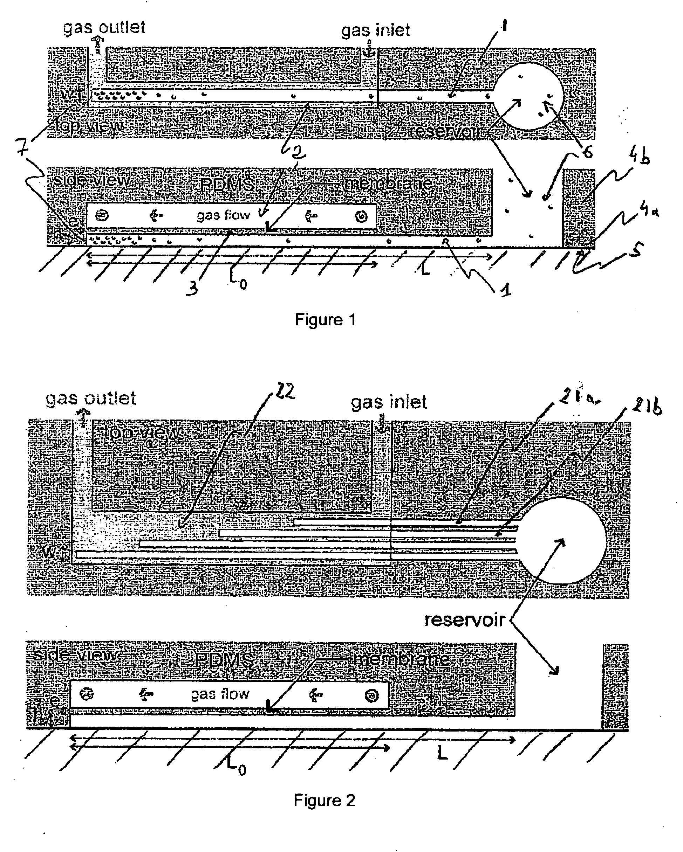

- the at least two flowing channels have each a different length surrounded by the evaporation chamber(s) (the evaporation can have a constant length with flowing channels having different lengths as shown on figure 2, or the flowing channels can have the same length with the evaporation chamber(s) being such that it surround different lengths of the flowing channel(s)),
- the same liquid mixture is introduced in at least the two channels,
- concentration in carrier fluid has a different rhythm in the different channels, and
- a solid and/or a concentrated phase forms at different rhythms in the different channels.

The rhythms refer to formation of a solid or concentrated phase as of time and/or space along the channels. The different rhythms can be used to generate information about solubility and/or crystallization kinetics and/or crystal growth kinetics.

In still another aspect of the embodiment two different liquid mixtures (for example as of chemical compositions and/or concentrations) of an identical or different carrier fluid and one or several (for example mixture and/or association and/or reagents) identical or different candidate chemical compound(s) are flowed into the flowing channels. The different liquid mixtures, can be provided with an associated microfluidic mixing device. One can thus generate information about the different mixture and candidate compounds and associations/reactions/interactions thereof or therewith. In one particular fashion:

- the carrier fluid is identical in each channel,
- the candidate chemical compound(s) are different in each channel and/or are mixtures of identical compounds with different concentrations in each channel, and
- the process provides an array of:

  - different concentrations of carrier fluid and or residence times along the channels, with
  - different compositions of matter through the parallel segments of the channels.

In another particular fashion:

- the carrier fluid is different in each channel,
- the candidate chemical compound(s) is identical in each channel and/or are mixtures of an identical compound with another compound, optionally with different concentrations, and
- the process provides an array of:

  - different concentrations of carrier fluid and or residence times along the channels, with
  - different compositions of matter through the parallel segments of the channels.

The array can constitute libraries of compositions of matters. One can perform measurements or observations for all or a part or the compositions of matter of the array (thus of the library).

The measurements and/or observations can be performed by any appropriate means, methods, and techniques. These include conventional techniques used in chemistry, physics and physico-chemisty, including those more recently developed for microfluidics. For example one can implement spectroscopy (for example Raman, Infra-red, UV), fluorescence, conductimetry, rheology measures (for example with using magnetic particles) and/or optical observations (usually with a microscope, optionally using a polarizer), preferably by image analysis. The measurements and/or observations can be are computed, optionally with using all or a part of the process parameter (flow rates, concentrations, natures of compounds) to provide:

- phase diagrams, such a binary, tertiary or further phase diagrams,

- crystallization diagrams,
- crystallization kinetics datas,
- crystal growth kinetics datas,
- solubility datas,
- nucleation of solids datas,
- kinetics of chemical reactions,
- formulation information, for example in the field of pharmaceuticals, cosmetic compositions, detergent compositions, coating compositions, and/or
- material engineering datas, for example for engineering inorganic compounds, or for engineering polymeric compounds.

The candidate chemical compound(s) can comprise:

- biological molecules, for example biological polymers, and/or
- non biological molecules, for examples synthetic polymers, surfactants, inorganic particles.

In some embodiments the carrier fluid is a solvent or at least some of candidate chemical compounds, the mixture of the carrier fluid being and the candidate being in a form of:

- a solution, or
- an emulsion of liquid droplets, or
- a dispersion of solid particles.

The invention also relates to a process of screening candidate compounds, comprising a process described above, and/or comprising the step of introducing the candidate compounds in the device above. One would typically performs measurements and/or observations one several compounds or mixtures of compounds and then identified a useful compounds or mixture of compounds for an optimum property.

Further details, embodiments, and/or advantages of the invention appear on the following examples which are not limitative.

## Examples

It is found that in standard microsystems built of PolyDiMethylSiloxane (PDMS), *spontaneous* water permeation through the PDMS matrix induces flows that can be used to concentrate colloids. We have engineered specialized microgeometries that allow us to control spatially and temporally the evaporation process as well as the resulting concentration of solutes.

After a brief description of the micro-devices, we demonstrate first our control of the concentration process on dilute aqueous solutions of fluorescein and nanoparticles. We then report controlled nucleation and growth of crystals of potassium chloride (KCl) in micro-channels, and extract various thermodynamic quantities (solubility, crystal density) as well as kinetic features (sensitive to the rate of concentration). After a discussion of the large spectrum of experiments that can be performed in similar microfabricated devices, we conclude on the versatility and large applicability to soft matter systems.

### The devices

The devices used are two-layer PDMS on glass microsystems (Figure 1). The microchannels (flowing channel (s)) of the bottom layer are filled with the solution of interest, while air is circulated through the microchannels (evaporation chamber) of the top layer so as to remove the water that pervaporates through the thin membrane of PDMS that separate the two networks where they overlap (thickness e in the 10-30 $\mu$m range). Many combinations of geometries for the bottom and top networks can be envisaged. We focus here on the simple "finger" geometry of Figure 1, a dead end (blind extremity) channel of rectangular cross section (height $h$, width $w$, length $L$) connected to a larger (millimetric) feeding reservoir containing the solution to be concentrated. A terminal section of length $L_0 < L$ (typically mms to cms) is covered by the water removal network.

The operation principle is simple: water in the bottom channel pervaporates through the thin membrane, which induces a compensating flow from the reservoir and concentration of solutes at the finger tip. This is similar to concentration at the boundary of a drying droplet, without the motion and shear of the concentration zone due to the recess of the liquid-air interface, and without spurious convective flows thanks to the confinement. In addition, many microchannels of various geometries and types can be fabricated on a single chip, so that we can run many experiments in parallel, from a single reservoir or multiple ones. The small dimensions lead to fast thermal regulation that permits isothermal studies, and we can directly observe the induced phases and phenomena thanks to the PDMS transparency.

General processes for preparing multilayer microfluidic devices are for example described in document WO 01/01025, which is incorporated by reference. These processes can be adapted simply to obtain the geometry (topography, design, length, width, depth, etc...) of the present invention.

Figure 1: Sketch of the finger geometry: top and side views showing the gas and liquid layers and the thin PDMS membrane in between (typical dimensions: $e$ = 10 $\mu$m, $h$ = 20 $\mu$m, $w$ = 200 $\mu$m, $L_0$ = 10 mm).

Control of flow and particle concentration

To quantify the induced flow, we adapt the analysis, anticipating that evaporation occurs here mostly through the thin membrane, at a volumic flow rate of water $v_e$ (it has dimension of a velocity). Mass conservation then sets the height-averaged velocity in the microchannel: $v(x) = -v_e(x/h)$. Its amplitude rises with the distance $x$ from the dead-end ($x=0$) up to $v_o = v_e(L_0/h)$ at the end of the evaporation zone ($x=L_0$). $v(x) = -v_0$ in the evaporation-free section of the finger $L_0 < x < L$.

With our dedicated systems we induce large values of $v_e$ (in the 50 nm/s range) due to the thin membranes (permeation yields a limit scaling as $1/e$) and to the dry air flown through the top network (velocities of order cm/s) that reduces the diffusive boundary layer. More importantly, we gain a spatial and temporal control on $v_e$ by designing the geometry (evaporation is negligible but for chosen locations) and by tuning in time the air flow and thus $v_e$. Quantitative temporal control of the flow field is clear from the motion of tracers at a given location as the air flow is successively turned on and off (Figure 9).

Figure 9: Velocity of fluorescent tracers at a fixed location in a finger in response to the switching on and off of air circulation in the water removal network (the instantaneous velocity (gray lines) is obtained from individual trajectories of 1.1 $\mu$m diameter tracer gathered by Particle Tracking Velocimetry. The symbols are for the mean velocity averaged on $\approx$10 trajectories. $L_0$= 12.5 mm, $h$ = 22 $\mu$m, $e$ = 20 $\mu$m.).

When on, tracer velocities of order 13 $\mu$m/s are observed, corresponding to $T_e = h/v_e \approx 10^3$ s and $v_e$ = 22 nm/s. The velocity drops below 1 $\mu$m/s when the air flow is turned off, after a response time of a few seconds, compatible with that of the water flux through the thin PDMS layer, $e^2/D_{PDMS}$ ~ 0.5 s for e $\approx$ 20 $\mu$m and a diffusion coefficient for water in PDMS $D_{PDMS}$ ~ $10^{-9}$ m2/s.

Control of the flow field translates into that of the induced concentration process. For the simplest case of a dilute species of diffusion coefficient $D$ in a finger, in a one-dimensional description the conservation equation $d_t c + d_x J = 0$ relates the concentration $c(x,t)$ and flux $J(x,t) = cv - Dd_x c$. We focus now on steady evaporation and thus constant $v(x)$ in time, with a reservoir at fixed concentration $c_0$. The physics at work is simple: the flow convects the solute towards the dead end where it accumulates. The current of solute injected into the finger is steady $J_o = c_o v_o$. Backwards thermal diffusion against the flow controls the width of the accumulation zone, which is $p = (Dh/v_e)^{1/2} = (D_{Te})^{1/2} < L_0$ for strong flows or long fingers $v_0 L_0/D$ >> 1. At distances larger than p, diffusion is negligible and the suspension is simply concentrated by water removal at constant particle flux $c(x)v(x) = c_o v_o$. Altogether, after a transient of duration $p^2/D = T_e$, the profile is well approximated by a Gaussian (because of the linearity of $v(x)$) increasing linearly in time, "fed" by a steady hyperbolic ramp delivering a current $Jo = c_o v_o$:

$$c(x,t) = c_0 v_0 t \ (2/p^2 \pi)^{1/2} \ exp(-x^2/2p^2) + c_0 R(x) \qquad (1)$$

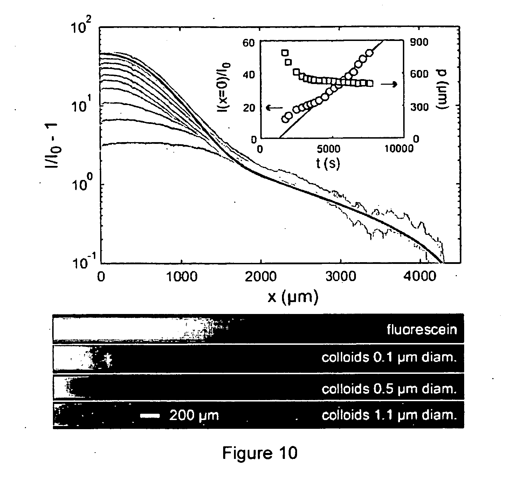

with $R(x) \approx L_0/x$ for $p << x << L_0$. Experiments on solutions of fluorescein and nanocolloids quantitatively support this analysis (Figure 10).

Figure 10: Evaporation-induced concentration. Top: log-linear plot of fluorescence intensity against position at different times for a finger filled with a aqueous solution of fluorescein. The fit corresponds to the prediction (1), with a Gaussian hump of width $p$ # 500 $\mu$m, that increases linearly in time (insert), yielding $v_e$ = 15 $\pm$ 2 nm/s and $T_e$ = 950 $\pm$100 s. ($c_0$=510-5 M, $L_0$ = 4.7 mm, $h$ = 15 $\mu$m, $e$ # 25 $\mu$m). Bottom: images from four fingers in similar conditions showing that the size of the accumulation zone varies with the size (and diffusion coefficient) of the markers.

Concentration at the tip increases as $dc(x = O)/dt = (2/\pi)^{1/2}(ve/h)^{3/2}c_0 L_0 D^{-1/2}$, offering many means of kinetic control of the process: through geometrical features $L_0$, $h$ and $e$ (that affects $v_e$), and through operational parameters $c_0$ and $v_e$. The latter can be modulated during an experiment, which allows us to pinch or relax concentration profiles, at a diffusion-limited response time ~ $p^2/D = h/v_e = T_e$ (independent of the species), much larger than the response time of the flow (minutes instead of seconds).

Controlled crystal nucleation and growth

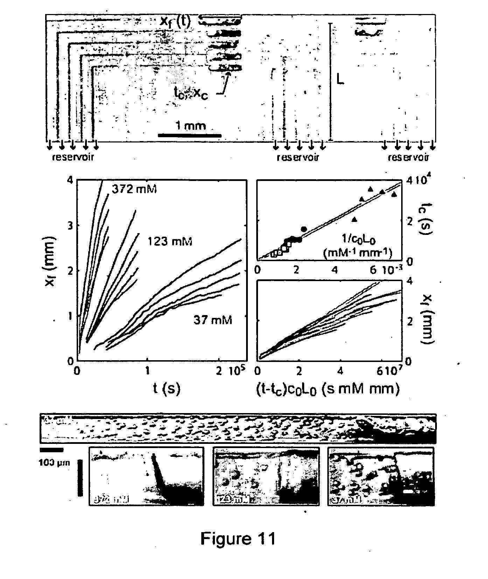

This control permits the study of phase transitions as we now show on a well characterized system, KCI aqueous solutions. We use a microchip with multiple "fingers" of different lengths $L_0$ originating from the same reservoir, and perform a few experiments, at the same steady air flux, with different intial concentrations. Upon concentration, we observe in each finger the nucleation of crystals close to tip, at $x_c$ and $t_c$ (Figure 11), and then their subsequent growth with a front location at $x_f(t)$. The time scales involved vary widely with initial concentration $c_0$ and finger length $L_0$. However, we can rescale data for both nucleation and growth by accounting for the concentration rate proportional to $c_0L_0$. Nucleation occurs at $t_c \sim K (c_0L_0)^{-1}$, which from (1) suggests a nucleation concentration. For KCI ($c_c$ = 4.0 $\pm$0.5 M, $D$ # 2.0 $\pm$0.2 $10^{-5}$ cm$^2$/s at this temperature), this is consistent with the experimental value of $K$ # 5.5 $\pm$1 sMm and a reasonable value for $T_e = h/v_e$ = 800 $\pm$50 s, $p$ # 1200 $\mu$m. The good rescaling of crystal growth data, suggest that it is limited by the solute feed at $J_0=c_0v_0=c_0L_0/T_e$. Further, if the growing crystal at solute concentration $c_x$ fills the channel, the initial growth rate should follow from mass conservation $[(dx_f)/dt] = J_0/c_X = (c_0L_0)/(T_e c_X)$. The observed value $(c_0L_o)$ $[(dx_f)/dt] \sim 0.6\pm0.1$ $10^{-4}$ sMm, yields a value $c_X$ = 20 $\pm$2 M in reasonable agreement with Handbook value (26 M). The decrease of the growth rate in time for each channel likely follows from that of the evaporation length as the crystal grows. This demonstrates a possible use of our devices. Feeding a few fingers with a system of reference (e.g. KCI or fluorescent probes) provides a local calibration of the value of $T_e$ (to account for variations from device to device). Then measurements of $t_c$ and front motion in other fingers fed with the solution to analyze yield estimates of $c_cD^{1/2}$ and of the solute concentration $c_X$ in the phase that nucleates.

Further, with our microdevices we can investigate the influence of the kinetics of the concentration process on the morphologies and phases produced. We indeed observe on KCI solutions that both the nucleation scenario and the crystal growth process vary when the initial concentration $c_0$ and thus the concentration rate are changed. In the studies reported above, we reproducibly observe demixing of the solution into what looks like droplets in front of the growing crystal, but only at the lowest initial concentration examined (Figure 11 bottom). Remarkably, the various transient organizations (nucleation scenario, presence or absence of droplets) do not affect the rescalings of Figure 11, possibly due to the narrow metastable region of KCI and the robustness of mass conservation arguments.

Figure 11: *Top*: view of the chip with 15 microchannels with different evaporation lengths $L_0$ (the bottom of the frame is the end of the evaporation zone). In each channel, the evaporation-induced concentration leads to crystalization of KCI solutions at $x_c$ after a time $t_c$. Crystal growth is then monitored $x_f(t)$. *Middle:* Left: crystal fronts $x_f(t)$ for various evaporation lengths $L_0$ and initial concentrations $c_0$ = 37 mM (bottom), $c_0$ = 123 mM (middle), $c_0$ = 372 mM (top). Right: plots of nucleation time $t_c$ against $1/c_0L_0$, and front growth $x_f$ against $c_0L_0(t_c)$. *Bottom:* Crystals growing at various $c_0$: "droplets" in front of the crystal are only visible at low concentrations.

Benefits from microfabrication

We have shown how microfabrication provides us with control, through flexibility in the geometrical parameters ($e, h, L_0, L$), and by permitting time regulation. In addition, the following can be done:

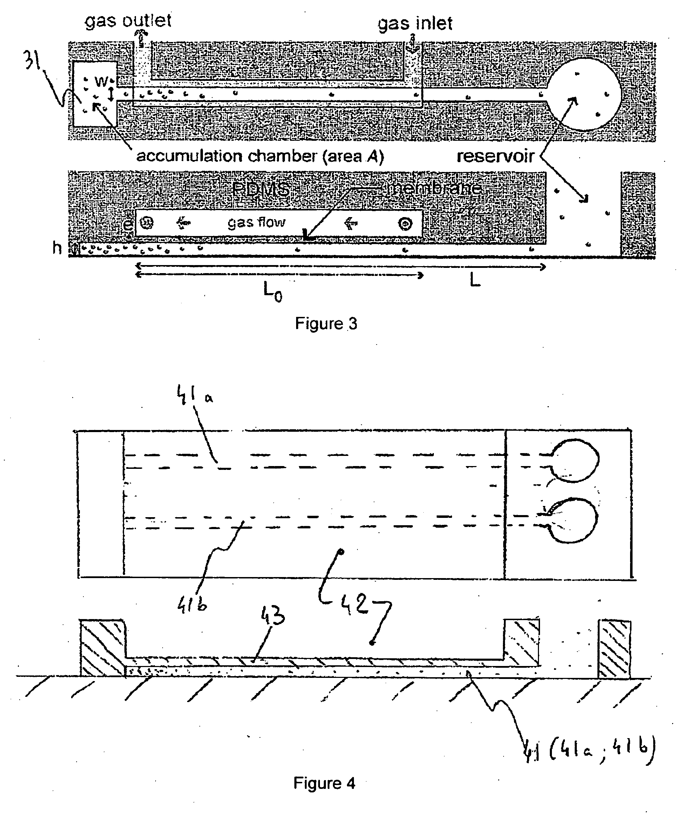

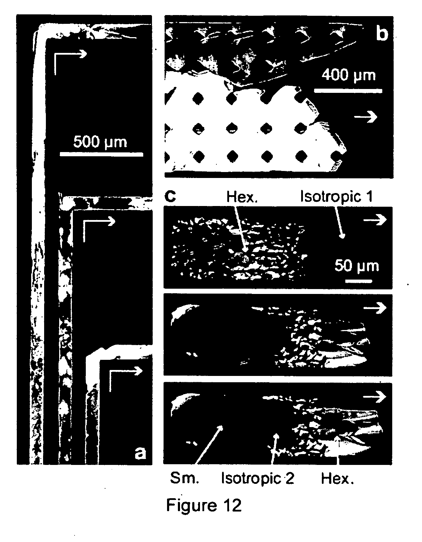

- We can parallelize tests so as to perform rapid screening with minute amount of material. We have only touched upon the corresponding potentialities with our 15 finger chip (Figure 4). In a more elaborate system, a distribution unit will feed many reservoirs with different solutions.
- Geometries are not limited to fingers, opening up possibilities. Let us illustrate this on an important example. The analysis of ill-characterized mixtures faces in the finger geometry a problem common to many other methods (drying, field induced concentration, ...): different solutes are concentrated at different rates ($p$ depends on $D$) and their proportions in the accumulation zone differ (in an a priori unknown way) from those in the reservoir. Geometrical design provides at least two solutions. One is to fabricate very long serpentine fingers and focus on the hyperbolic concentration ramp ($R(x)$ in equation (1)) where all species are concentrated alike. A second strategy consists in adding a chamber of area $A$ (thickness $h$) at the end of the finger with pervaporation *limited to the finger.* The accumulation area $A$ + $pw$ is essentially independent of $p$ (or $D$) as long as $p << A/w$ (with $A$ a few mm$^2$ and w a few hundred microns, this encompasses anything from ions to micron-sized colloids), restoring homotetic concentration from the reservoir.
- We can force the growing phases through turns using wiggly fingers, or through arrays of obstacles of controlled shapes embedded in chambers (Figure 12, a and b). This provide insights into growth mechanisms and the role of epitaxy as one can force various angles between the growth direction and the crystalline axis of the growing phase.
- The PDMS devices presented here will work only with a limited set of solvents that do not swell this elastomer. However microfabrication permits the extension of the concepts presented here to other materials. The bottom layer of channels can for example be etched in an impermeable solid matrix (e.g; glass for the "floor" and "side-walls") separated from the air-circulating network by a thin membrane of a chosen porous materials. Similarsandwich micro-constructions have been used in other contexts to permit exchange between two layers of solvent carrying networks.

Beyond ionic solutions and colloids, the invention can be used on on surfactant solutions and on biomaterial crystallization. Experiments on Sodium Dodecyl Sulfate (SDS), allows to observe sequences of many different mesophases in a given microchannel (Figure 12, c), and more importantly complex and intriguing dependences of that sequence and of the texture of each phase on the kinetics and history of the concentration process. At the same time, data for nucleation and front growth obey rescalings akin to those of KCl, showing our kinetic control.

Figure 12: (*a*, *b*): Birefringent $Cu_2SO_4$ crystals grown through channels with sharp turns and through a chamber with diamond-section pillars. (*c*): evolution in time of the phase and texture pattern for a SDS solution as observed through crossed-polarizers (top to bottom, $t$ = 45, 60, 70 min, $c$ # 40 mM; Isotropic 1 = micellar solution, Hex. = hexagonal phase, Isotropic 2 = cubic or re-entrant micellar solution, Sm. = Smectic phase). The arrows indicate the growth direction.

**Claims**

1. Microfluidic monolayered or multilayered device comprising:

   - at least one elongated flowing channel (1, 21 a, 21 b, 41 a, 41 b, 61 a, 61 b, 71, 81) which has a width and/or depth of less than 10 $\mu$m and a length of more than 1 mm, for flowing a liquid therein, having a length and a width and/or depth, in a first layer, said channel having a closed section,
   - at least one chamber (2, 72, 82) or zone in a second layer,
   - said chamber or zone surrounding the width and/or depth of the channel, along at least 1/3 of the length, preferably at least 1/2, preferably at least 2/3, and/or along at least 10 times the width and/or depth of the flowing channel, preferably at least 100 times;

   **characterized in that**

   - said chamber (2, 72, 82) or zone is an evaporating chamber for flowing a gas therein, said chamber having a closed section, or at least one evaporating open-air zone (42, 62),
   - the flowing channel and the evaporation chamber or zone being separated by an evaporation membrane (3, 43, 73, 83);
   - the flowing channel(s) extends beyond the evaporation chamber(s) or zone(s), and has an enlarged blind extremity forming an accumulation chamber (31, 51, 63a, 63b, 74, 84), not surrounded by the evaporation chamber(s) or zone(s).

2. A device according to one of the preceding claims, **characterized in that** the flowing channel(s) has a width and/or depth of less than 5 $\mu$m, and a length of more than 5 mm, preferably of more than 10 mm.

3. A device according to one of the preceding claims, **characterized in that** the evaporation membrane:

   - closes a part of the section of the flowing channel(s) and of the evaporation chamber, and/or
   - closes a part of the section of the flowing channel(s) and defines the evaporation zone.

4. A device according to one of the preceding claims, **characterized in that** the enlarged blind extremity has a width and/or depth of at least 5 times higher than the width and/or depth or the flowing channel(s).

5. A device according to one of the preceding claims, **characterized in that** it comprises:

   - at least two flowing channels (21a, 21b or 41a, 41 b, or 61a or 61b), being parallel on at least one segment thereof, and
   - a single evaporation chamber (22) or zone (42, 62) surrounding the at least two flowing channels, or at least two evaporation chambers or zones, preferably evaporation channels, surrounding each at least one of the flowing channels.

6. A device according to claim 5, **characterized in that** the at least two flowing channels have each a different length surrounded by the evaporation chamber(s) or zone(s).

7. Process for determining physical and/or chemical properties of a chemical compound or a mixture of chemical compounds, **characterized in that** it comprises the steps of:

a) providing

- a liquid mixture of a carrier fluid and one or several candidate chemical compound(s) into the flowing channel(s) of the device according to one of claims 1 to 6, and
- a gas flow in the evaporation chamber, or open-air contact to the evaporation zone, or a gas flow surrounding the evaporation zone,

b) flowing the liquid mixture along at least a part the flowing channel(s), and removing at least partly the carrier fluid from the channel by evaporating through the membrane into the evaporation chamber or into the open-air evaporation zone, thereby providing in the flowing channel(s) solid or liquid compositions of matter with different concentrations of carrier and residence times along the channel(s), and thereby providing accumulation of compositions of matter in the accumulation chamber as defined in claim 1, and

c) performing at least one measurement or observation of a composition of matter

- in the channel(s), at least one point along the channel(s), and/or
- in the accumulation chamber.

8. A process according to claim 7, **characterized in that** the candidate chemical compound(s) forms a solid along the channel(s), said solid being:

- dispersed in the carrier fluid, accumulating in a part of the flowing channel(s) and/or in the accumulation chamber, or
- completely solidified.

9. A process according to one of claims 7 to 8, **characterized in that** the compositions of matter are varied, in space along the channel(s) and/or in time at one point along the channel(s), by varying the gas flow characteristics, such as stopping and/or re-starting the gas flow or varying the speed flow, or varying the temperature.

10. A process according to one of claims 7 to 9, **characterized in that**:

- the candidate compound(s) forms a solid and/or a concentrated phase along the channel(s), that accumulate in the accumulation chamber, and
- a flow of solids in time and/or in space is controlled, as diffusion of solids back in the channel is controlled.

11. A process according to one of claims 7 to 10, **characterized in that** one performs a first measure in the accumulation chamber at time t1 with a proportion of carrier fluid of c1, and then performs at least one second measure in the accumulation chamber at time t2 with a proportion of carrier fluid of c2 being lower than c1.

12. A process according to one of claims 7 to 11, **characterized in that** one introduces first in the flowing channel a mixture of candidate compounds A and B with relative proportions of respectively $a/(a+b)$ and $b/(a+b)$, then one performs a measure in the accumulation chamber for said proportions, then one introduces a second proportion of $a'/(a'+b')$ and $b'/(a'+b')$, and then one performs a measure in the accumulation chamber of proportions respectively of $(a+a')/(a+a'+b+b')$ and $(a+a')/(a+a'+b+b')$.

13. A process according to one of claims 7 to 12, **characterized in that** the device comprises at least two flowing channels, being parallel on at least one segment thereof, wherein the device has accumulation chambers associated with the flowing channels, and wherein one performs the following:

- first step:

- one introduces in a first flowing channel a mixture of candidate compounds A and B with relative proportion of respectively $a/(a+b)$ and $b/(a+b)$ then one performs a measure in the accumulation chamber of said channel for said proportions,
- one introduces in a second flowing channel a mixture of candidate compounds A and B with relative proportion of respectively a'/(a'+b') and b'/(a'+b') then one performs a measure in the accumulation chamber of said channel for said proportions,

- optionally, then second step:

- one reiterates the measure with same proportions in respective accumulation chambers but with different concentrations of carrier fluid.

**14.** A process according to claim 13, **characterized in that**:

- the at least two flowing channels have each a different length surrounded by the evaporation chamber(s),
- the same liquid mixture is introduced in at least the two channels,
- concentration in carrier fluid has a different rhythm in the different channels, and
- a solid and/or concentrated phase forms at different rhythms in the different channels.

**15.** A process according to one of claims 13 to 14, **characterized in that**:

- two different liquid mixtures with an identical or different carrier fluid and one or several identical or different candidate chemical compound(s) are flowed into the flowing channels.

**Patentansprüche**

**1.** Mikrofluidische einschichtige oder mehrschichtige Vorrichtung, umfassend:

- mindestens einen länglichen Strömungskanal (1, 21a, 21b, 41a, 41b, 61a, 61b, 71, 81), der eine Breite und/ oder Tiefe von weniger als 10 $\mu$m und eine Länge von mehr als 1 mm hat, zum Strömenlassen einer Flüssigkeit darin, der eine Länge und eine Breite und/oder Tiefe in einer ersten Schicht hat, wobei der Kanal einen geschlossenen Abschnitt hat,
- mindestens eine Kammer (2, 72, 82) oder Bereich in einer zweiten Schicht,
- wobei die Kammer oder der Bereich die Breite und/oder Tiefe des Kanals umgibt, mindestens entlang 1/3 der Länge, vorzugsweise mindestens 1/2, vorzugsweise mindestens 2/3 und/oder entlang mindestens 10 mal der Breite und/oder Tiefe des Strömungskanals, vorzugsweise mindestens 100 mal;

**dadurch gekennzeichnet, dass**

- die Kammer (2, 72, 82) oder der Bereich eine Verdampfungskammer zum Strömenlassen eines Gases darin ist, wobei die Kammer einen geschlossenen Abschnitt hat oder mindestens einen offenen Verdampfungsbereich (42, 62),
- wobei der Strömungskanal und die Verdampfungskammer oder der -bereich durch eine Verdampfungsmembran (3, 43, 73, 83) getrennt sind;
- der (die) Strömungskanal/-kanäle sich über die Verdampfungskammer(n) oder Bereich(e) hinaus erstreckt/-en und ein vergrößertes blindes Ende hat/haben, das eine Akkumulationskammer (31, 51, 63a, 63b, 74, 84) bildet, die nicht von der/den Verdampfungskammer(n) oder Bereich(en) umgeben ist.

**2.** Vorrichtung gemäß einem der vorhergehenden Ansprüche, **dadurch gekennzeichnet, dass** der/die Strömungskanal/-kanäle eine Breite und/oder Tiefe von weniger als 5 $\mu$m hat/haben und eine Länge von mehr als 5 mm, vorzugsweise von mehr als 10 mm.

**3.** Vorrichtung gemäß einem der vorhergehenden Ansprüche, **dadurch gekennzeichnet, dass** die Verdampfungsmembran:

- einen Teil des Abschnitts des/der Strömungskanals/-kanäle und der Verdampfungskammer verschließt, und/ oder
- einen Teil des Abschnitts des/der Strömungskanals/-kanäle verschließt und den Verdampfungsbereich definiert.

**4.** Vorrichtung gemäß einem der vorhergehenden Ansprüche, **dadurch gekennzeichnet, dass** das vergrößerte blinde Ende eine Breite und/oder Tiefe von mindestens dem 5-fachen der Breite und/oder Tiefe des/der Strömungskanals/-kanäle hat.

5. Vorrichtung gemäß einem der vorhergehenden Ansprüche, **dadurch gekennzeichnet, dass** sie Folgendes umfasst:

- mindestens zwei Strömungskanäle (21a, 21b oder 41a, 41b oder 61a oder 61b), die parallel zu mindestens einem Segment derselben sind, und
- eine einzelne Verdampfungskammer (22) oder ein einzelner Verdampfungsbereich (42, 62), die die mindestens zwei Strömungskanäle umgeben, oder mindestens zwei Verdampfungskammern oder -bereiche, vorzugsweise Verdampfungskanäle, die jeweils mindestens einen der Strömungskanäle umgeben.

6. Vorrichtung nach Anspruch 5, **dadurch gekennzeichnet, dass** die mindestens zwei Strömungskanäle jeweils eine unterschiedliche Länge haben, die vom/von den Verdampfungskammer(n) oder -bereichen umgeben sind.

7. Prozess zum Bestimmen von physikalischen und/oder chemischen Eigenschaften einer chemischen Verbindung oder einer Mischung von chemischen Verbindungen, **dadurch gekennzeichnet, dass** er die folgenden Schritte umfasst:

a) Bereitstellen

- einer Flüssigkeitsmischung einer Trägerflüssigkeit und einer oder mehrerer chemischer Kandidatenverbindung(en) in dem/den Strömungskanal/-kanälen der Vorrichtung nach einem der Ansprüche 1 bis 6, und
- einer Gasströmung in der Verdampfungskammer oder einem offenen ,Kontakt mit dem Verdampfungsbereich, oder eine Gasströmung, die den Verdampfungsbereich umgibt,

b) Strömenlassen der Flüssigkeitsmischung zumindest teilweise entlang des/der Strömungskanals/-kanäle und Entfernen zumindest von einem Teil der Trägerflüssigkeit aus dem Kanal durch Verdampfen durch die Membran in die Verdampfungskammer oder in den offenen Verdampfungsbereich, dadurch Bereitstellen von festen oder flüssigen Zusammensetzungen von Material mit unterschiedlichen Konzentrationen des Trägers und Verweilzeiten im/in den Strömungskanal/-kanälen entlang des/der Kanals/Kanäle und dadurch Erreichen von Akkumulation von Zusammensetzungen von Material in der Akkumulationskammer, wie in Anspruch 1 definiert, und
c) Ausführen von mindestens einer Messung oder Beobachtung einer Materialzusammensetzung

- im/in den Kanal/Kanälen, an mindestens einem Punkt entlang des/der Kanals/Kanäle, und/oder
- in der Akkumulationskammer.

8. Prozess nach Anspruch 7, **dadurch gekennzeichnet, dass** die chemische/n Kandidatenverbindung(en) einen Feststoff entlang des/der Kanals/Kanäle bildet/bilden, wobei der Feststoff:

- in der Trägerflüssigkeit dispergiert ist, sich in einem Teil des/der Strömungskanals/-kanäle und/oder in der Akkumulationskammer ansammelt, oder
- vollständig erstarrt ist.

9. Prozess nach einem der Ansprüche 7 bis 8, **dadurch gekennzeichnet, dass** die Zusammensetzungen von Material im Raum entlang des/der Kanals/Kanäle und/oder in der Zeit an einem Punkt entlang des/der Kanals/Kanäle durch Variieren der Gasströmungskennwerte unterschiedlich sind, wie zum Beispiel Stoppen und/oder Neu starten der Gasströmung oder Variieren der Strömungsgeschwindigkeit oder Variieren der Temperatur.

10. Prozess nach einem der Ansprüche 7 bis 9, **dadurch gekennzeichnet, dass**:

- die Kandidatenverbindung(en) eine feste und/oder konzentrierte Phase entlang des/der Kanals/Kanäle bildet/bilden, die sich in der Akkumulationskammer ansammeln, und
- ein Strom von Feststoffen in Zeit und/oder Raum gesteuert wird, sowie die Diffusion von Feststoffen hinten im Kanal gesteuert wird.

11. Prozess nach einem der Ansprüche 7 bis 10, **dadurch gekennzeichnet, dass** man eine erste Messung in der Akkumulationskammer zur Zeit t1 mit einem Teil der Trägerflüssigkeit von c1 ausführt, und dann mindestens eine zweite Messung in der Akkumulationskammer zur Zeit t2 mit einem Teil der Trägerflüssigkeit von c2 ausführt, der kleiner als c1 ist.

**12.** Prozess nach einem der Ansprüche 7 bis 11, **dadurch gekennzeichnet, dass** man zuerst in den Strömungskanal eine Mischung von Kandidatenverbindungen A und B mit relativen Anteilen von a/(a+b) bzw. b/(a+b) einleitet, man dann eine Messung in der Akkumulationskammer für die Anteile ausführt, man dann einen zweiten Anteil von a'/(a'+b') und b'/(a'+b') und man dann eine Messung in der Akkumulationskammer der Anteile (a+a')/(a+a'+b+b') bzw. (a+a')/(a+a'+b+b') ausführt.

**13.** Prozess nach einem der Ansprüche 7 bis 12, **dadurch gekennzeichnet, dass** die Vorrichtung mindestens zwei Strömungskanäle hat, die zu mindestens einem Segment derselben parallel sind, wobei die Vorrichtung Akkumulationskammern hat, die mit den Strömungskanälen verbunden sind, und wobei man Folgendes ausführt:

- erster Schritt:
- man leitet in einen ersten Strömungskanal eine Mischung von Kandidatenverbindungen A und B mit einem relativen Anteil von a/(a+b) bzw. b/(a+b) ein, dann führt man eine Messung in der Akkumulationskammer des Kanals für die Anteile aus,
- man leitet in einen zweiten Strömungskanal eine Mischung von Kandidatenverbindungen A und B mit einem relativen Anteil von a'/(a'+b') und b'/(a'+b') ein, dann führt man eine Messung in der Akkumulationskammer des Kanals für die Anteile aus,
- optional dann der zweite Schritt:
- man wiederholt die Messung mit denselben Anteilen in den jeweiligen Akkumulationskammern, aber mit unterschiedlichen Konzentrationen der Trägerflüssigkeit.

**14.** Prozess nach Anspruch 13, **dadurch gekennzeichnet, dass**:

- die mindestens zwei Strömungskanäle jeweils eine unterschiedliche Länge haben, die von der/den Verdampfungskammer(n) umgeben sind,
- dieselbe Flüssigkeitsmischung in die mindestens zwei Kanäle eingeleitet ist,
- die Konzentration in der Trägerflüssigkeit in den verschiedenen Kanälen einen unterschiedlichen Rhythmus hat, und
- sich eine feste und/oder konzentrierte Phase bei unterschiedlichen Rhythmen in den verschiedenen Kanälen bildet.

**15.** Prozess nach einem der Ansprüche 13 bis 14, **dadurch gekennzeichnet, dass**:

- zwei verschiedene Flüssigkeitsmischungen mit einer identischen oder unterschiedlichen Trägerflüssigkeit und mit einem oder mehreren identischen oder unterschiedlichen chemischen Kandidatenverbindungen in die Strömungskanäle geschickt werden.

**Revendications**

**1.** Dispositif microfluide en une ou plusieurs couches, comprenant :

- au moins un canal d'écoulement allongé (1, 21a, 21b, 41a, 41b, 61a, 61b, 71, 81) dont la largeur et/ou la profondeur sont inférieures à 10 $\mu$m et la longueur supérieure à 1 mm, dans lequel peut s'écouler un liquide et présentant une longueur et une largeur et/ou une profondeur dans une première couche, ledit canal présentant une partie fermée,
- au moins une chambre (2, 72, 82) ou une zone dans une deuxième couche,
- ladite chambre ou zone entourant la largeur et/ou la profondeur du canal sur au moins 1/3, de préférence au moins 1/2, de préférence au moins 2/3 de la longueur et/ou sur au moins 10 fois et de préférence au moins 100 fois la largeur et/ou la profondeur du canal d'écoulement,

**caractérisé en ce que**

- ladite chambre (2, 72, 82) ou zone est une chambre d'évaporation dans laquelle peut s'écouler un gaz, ladite chambre présentant une partie fermée ou au moins une zone d'évaporation (42, 62) ouverte à l'air,

- le canal d'écoulement et la chambre ou zone d'évaporation étant séparés par une membrane d'évaporation (3, 43, 73, 83),
- le ou les canaux d'écoulement s'étendant au-delà de la ou des chambres ou zones d'évaporation et présentant une extrémité aveugle évasée formant une chambre d'accumulation (31, 51, 63a, 63b, 74, 84) qui n'est pas entourée par la ou les chambres ou zones d'évaporation.

2. Dispositif selon l'une des revendications précédentes, **caractérisé en ce que** le ou les canaux d'écoulement ont une largeur et/ou une profondeur inférieure à 5 μm et une longueur supérieure à 5 mm et de préférence supérieure à 10 mm.

3. Dispositif selon l'une des revendications précédentes, **caractérisé en ce que** la membrane d'évaporation ferme une partie de la partie du ou des canaux d'écoulement et de la chambre d'évaporation et/ou ferme une partie de la partie du ou des canaux d'écoulement, et définit la zone d'évaporation.

4. Dispositif selon l'une des revendications précédentes, **caractérisé en ce que** l'extrémité aveugle évasée a une largeur et/ou une profondeur au moins 5 fois supérieures à la largeur et/ou à la profondeur du ou des canaux d'écoulement.

5. Dispositif selon l'une des revendications précédentes, **caractérisé en ce qu'**il comprend au moins deux canaux d'écoulement (21a, 21b ou 41a, 41b, ou 61a ou 61b) parallèles sur au moins l'un de leurs segments et

   - une unique chambre d'évaporation (22) ou zone (42, 62) entourant les deux ou plusieurs canaux d'écoulement ou au moins deux chambres ou zones d'évaporation, de préférence des canaux d'évaporation, qui entourent chacun des différents canaux d'écoulement.

6. Dispositif selon la revendication 5, **caractérisé en ce que** les deux ou plusieurs canaux d'écoulement ont chacun une longueur différente entourée par la ou les chambres ou zones d'évaporation.

7. Procédé de détermination de propriétés physiques et/ou chimiques d'un composé chimique ou d'un mélange de composés chimiques, **caractérisé en ce qu'**il comprend les étapes qui consistent à :

   a) prévoir :

      - un mélange liquide constitué d'un fluide porteur et d'un ou plusieurs composés chimiques candidats dans le ou les canaux d'écoulement du dispositif selon l'une des revendications 1 à 6 et
      - un écoulement de gaz dans la chambre d'évaporation, un contact ouvert à l'air avec la zone d'évaporation ou un écoulement de gaz qui entoure la zone d'évaporation,

   b) faire s'écouler le mélange liquide dans au moins une partie du ou des canaux d'écoulement et enlever au moins une partie du fluide porteur du canal par évaporation à travers la membrane pour l'envoyer dans la chambre d'évaporation ou dans la zone d'évaporation ouverte à l'air, ainsi amener dans le ou les canaux d'écoulement les compositions solides ou liquides de substances à différentes concentrations de porteur et à différents temps de séjour dans le ou les canaux et ainsi assurer l'accumulation des compositions de substances dans la chambre d'accumulation selon la revendication 1 et

   c) exécuter au moins une mesure ou une observation d'une composition de substance

      - dans le ou les canaux, au moins en un point situé sur le ou les canaux et/ou
      - dans la chambre d'accumulation.

8. Procédé selon la revendication 7, **caractérisé en ce que** le ou les composés chimiques candidats forment un solide le long du ou des canaux, ledit solide étant :

   - dispersé dans le fluide porteur en s'accumulant dans une partie du ou des canaux d'écoulement et/ou dans la chambre d'accumulation ou
   - complètement solidifié.

9. Procédé selon l'une des revendications 7 à 8, **caractérisé en ce que** l'on fait varier les compositions de substances dans l'espace qui s'étend le long du ou des canaux et/ou au cours du temps en un point du ou des canaux en faisant varier les caractéristiques d'écoulement de gaz, par exemple en interrompant et/ou en relançant l'écoulement de gaz, en faisant varier la vitesse d'écoulement ou en faisant varier la température.

**10.** Procédé selon l'une des revendications 7 à 9, **caractérisé en ce que**

- le ou les composés candidats forment dans le ou les canaux un solide et/ou une phase concentrée qui s'accumulent dans la chambre d'accumulation et
- un écoulement de solide est contrôlé dans le temps et/ou dans l'espace en contrôlant la rétrodiffusion des solides dans le canal.

**11.** Procédé selon l'une des revendications 7 à 10, **caractérisé en ce que** l'on exécute une première mesure dans la chambre d'accumulation à un instant $t1$ à une proportion $c1$ de fluide porteur et **en ce qu'**on exécute ensuite au moins une deuxième mesure dans la chambre d'accumulation à un instant $t2$ à une proportion $c2$ de fluide porteur, $c2$ étant inférieur à $c1$.

**12.** Procédé selon l'une des revendications 7 à 11, **caractérisé en ce que** l'on introduit d'abord dans le canal d'écoulement un mélange de composés candidats A et B dont les proportions relatives sont respectivement a/(a+b) et b/(a+b), pour ensuite exécuter une mesure dans la chambre d'accumulation dans lesdites proportions, introduire une deuxième proportion a'/(a'+b') et b'/(a'+b') et enfin exécuter une mesure dans la chambre d'accumulation de proportions respectives (a+a')/(a+a'+b+b') et (a+a')/(a+a'+b+b').

**13.** Procédé selon l'une des revendications 7 à 12, **caractérisé en ce que** le dispositif comprend au moins deux canaux d'écoulement parallèles sur au moins l'un de leurs segments, le dispositif présentant des chambres d'accumulation associées aux canaux d'écoulement, et dans lequel on exécute les étapes suivantes :

- première étape :
- on introduit dans un premier canal d'écoulement un mélange de composés candidats A et B dans des proportions relatives respectives a/(a+b) et b/(a+b) avant une mesure desdites proportions dans la chambre d'accumulation dudit canal,
- on introduit dans un deuxième canal d'écoulement un mélange de composés candidats A et B dans des proportions relatives respectives a'/(a'+b') et b'/(a'+b') avant d'exécuter une mesure desdites proportions dans la chambre d'accumulation dudit canal,
- facultativement une deuxième étape :
- on répète la mesure avec les mêmes proportions dans les chambres d'accumulation relatives mais à différentes concentrations de fluides porteurs.

**14.** Procédé selon la revendication 13, **caractérisé en ce que**

- les deux ou plusieurs canaux d'écoulement présentent chacun une longueur différente entourée par la ou les chambres d'évaporation,
- on introduit le même mélange liquide dans les deux ou plusieurs canaux,
- la concentration de fluide porteur présente un rythme différent dans les différents canaux et
- une phase solide et/ou une phase concentrée se forment à différents rythmes dans les différents canaux.

**15.** Procédé selon l'une des revendications 13 ou 14, **caractérisé en ce que**

- deux mélanges liquides différents contenant le même fluide porteur ou des fluides porteurs différents et un ou plusieurs composés chimiques candidats identiques ou différents sont amenés à s'écouler dans les canaux d'écoulement.

Figure 1

Figure 2

gas outlet                                    gas inlet

accumulation chamber (area A)          reservoir

PDMS        membrane

gas flow

$L_0$          L

Figure 3

41a

41b      43      42      41 (41a, 41b)

Figure 4

Figure 5

Figure 6

Figure 7

Figure 8

Figure 9

Figure 10

Figure 11

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040115838 A1
- EP 135419 A2

- WO 0101025 A